# FASCICULE DE BREVET EUROPEEN

(11) **EP 4 076 834 B1**
(45) Date de publication et mention de la délivrance du brevet: **28.08.2024**
(21) Numéro de dépôt: 20845781.2
(22) Date de dépôt: 14.12.2020
(51) Int. Cl.: B23K 35/02, B23K 35/00, B23K 35/28, B32B 15/01, C22C 21/02, C22C 21/10, F28D 1/053, F28F 21/08

(54) **BANDE OU TOLE EN ALLIAGES D'ALUMINIUM POUR BRASAGE SANS FLUX OU AVEC FLUX REDUIT**
ALUMINIUMLEGIERUNGSBAND ODER -BLECH FÜR LÖTEN OHNE FLUSSMITTEL ODER MIT REDUZIERTEM FLUSSMITTEL
ALUMINIUM ALLOY STRIP OR SHEET FOR NO-FLUX OR REDUCED-FLUX SOLDERING

(30) Priorité: 20.12.2019 FR 1915094
(43) Date de publication de la demande: 26.10.2022
(73) Titulaire: Constellium Neuf Brisach, 68600 Biesheim (FR)
(72) Inventeur: JARRY, Philippe, 38000 GRENOBLE (FR); CHEHAB, Bechir, 38500 VOIRON (FR)
(74) Mandataire: Constellium - Propriété Industrielle
(86) Numéro de dépôt international: PCT/FR2020/052414
(87) Numéro de publication internationale: WO 2021/123585

(56) Documents cités:
- WO-A1-2007/042206
- WO-A1-2016/015917
- WO-A1-2016/015974
- WO-A1-2016/045973
- WO-A1-2016/134967
- WO-A1-2017/137236
- WO-A1-2018/184806
- FR-A1- 3 074 717
- SHARMA ASHUTOSH, SHIN Y.S., JUNG JAE-PIL: "Influence of Various Additional Elements in Al Based Filler Alloys for Automotive and Brazing Industry", JOURNAL OF WELDING AND JOINING, vol. 33, no. 5, 1 October 2015 (2015-10-01), pages 1 - 8, XP002799349, ISSN: 2466-2232, DOI: 10.5781/JWJ.2015.3

## Description

### DOMAINE TECHNIQUE

L'invention concerne des bandes ou tôles en alliages d'aluminium revêtues sur une ou deux faces d'une couche de brasage, et éventuellement d'une ou deux couches intermédiaires, et destinées à la fabrication de pièces brasées, notamment des échangeurs de chaleur pour l'automobile ou le bâtiment, et plus particulièrement de pièces assemblées par brasage sans flux ou avec une quantité réduite de flux, de préférence sous atmosphère contrôlée.

### ART ANTERIEUR

Actuellement, le brasage industriel pour les échangeurs de chaleur est principalement réalisé avec le procédé Nocolok^{®} dans de grands fours en continu de brasage sous atmosphère contrôlée (CAB ou « Controlled Atmosphère Brazing » en anglais). Cependant, les constructeurs automobiles souhaitent fortement réduire, voire supprimer, l'utilisation de flux. Il en résulte une demande croissante de fournir des bandes ou tôles de brasage capables d'assurer un brasage satisfaisant avec une quantité de flux fortement réduite ou même sans aucune application de flux.

Lorsque de grandes quantités de flux sont utilisées pour le brasage, des résidus de flux sont présents à l'intérieur des échangeurs de chaleur. Ils peuvent interagir avec le liquide de refroidissement, ce qui peut aboutir à un bouchage des canaux de réfrigération et ainsi entraîner une perte d'efficacité de l'échange thermique. De plus, les risques pour l'environnement et la santé (parfois produits CMR (cancérogènes, mutagènes et reprotoxiques) contenant du fluor) et le coût sont des inconvénients supplémentaires. En outre, les fabricants d'échangeurs de chaleur sont désormais soumis à de nouvelles spécifications en termes de résidus de flux, qui les obligent à réduire les quantités de flux utilisées jusqu'à maintenant. Pour référence, le fluxage standard est de 5 à 10 g/m² en moyenne à +/- 3 g/m². On parle de fluxage moyen car la répartition du flux n'est pas forcément homogène sur toute la surface. Par exemple il peut y avoir une application localisée de flux (par exemple à l'aide d'un flux sous forme de pâte) et/ou on peut fluxer sur une seule ou deux faces de l'objet à braser.

Il est à noter en outre que le nettoyage des pièces post brasage, pour enlever le flux, est coûteux, long, et il ne s'applique pas à toutes les configurations.

Le brasage sous vide est une technologie connue pour être efficace pour braser sans flux, mais il est coûteux et inadapté pour les grandes pièces. Il fonctionne avec des fours discontinus ayant des temps de cycle longs. De plus, peu de clients sont équipés de ce système. C'est pourquoi, une solution CAB fiable, sans flux, est nécessaire pour remplacer le brasage sous vide.

De nombreux brevets ont été déposés sur des compositions d'âme et/ou de plaquage, avec ou sans couche intermédiaire, permettant de braser avec succès sans flux.

Le brevet EP1687456B1 divulgue un alliage contenant une quantité importante de Mg (0,3 à 3 % en masse) et recouvert sur au moins une face par un alliage 4xxx comprenant entre 0,01 et 0,5 % d'au moins un élément choisi parmi Ag, Be, Bi, Ce, La, Pb, Pd, Sb, Y ou Mischmétal. L'addition d'yttrium à l'alliage d'âme entre 0,01 et 0,5 % est également divulguée. Le meilleur résultat en termes de brasabilité est obtenu avec une addition de 0,15 % de Bi dans l'âme en même temps qu'une addition de 0,19 % de Bi dans le plaquage 4047.

Le brevet US8413876B2 divulgue une addition d'yttrium comprise entre 0,01 et 0,5 % dans l'alliage d'âme. L'invention telle que décrite dans ce brevet s'applique quelle que soit la composition en Mg de l'âme inférieure à 3 % et associée à une couche de plaquage contenant au moins un élément de modification de la tension superficielle parmi Ag, Be, Ce, La, Pb, Pd, Sb et Mischmétal. Une addition de Sn dans l'alliage d'âme inférieur à 3 % est également une option. Cependant, les solutions telles que décrites dans les deux brevets ci-avant pourraient être améliorées, notamment pour convenir à toutes les conditions (épaisseur, état métallurgique, configuration des différentes couches entre elles, nature et qualité du four de brasage, etc.). En l'absence de flux, la couche d'oxyde présente à la surface de la plaque de brasage doit être cassée de l'intérieur. Les éléments ayant une énergie libre de formation d'oxyde inférieure ou égale à celle de Al₂O₃ sont de bons candidats pour réaliser la fragmentation du film d'oxyde. Les plus courants sont Mg, Be, Li, Ca, Ce, Zr, Sr, Ba, La, Y. Cependant, ces éléments ont également une réactivité élevée avec l'oxygène et peuvent former une quantité excessive d'oxyde à la surface s'ils sont ajoutés en grande quantité dans l'alliage de plaquage. Selon les demandes de brevet EP3363583A1 et EP3363582A1, il convient de privilégier les ajouts de Li, Be ou Mg dans l'alliage de plaquage car ils conduisent à la formation de particules d'oxyde à la surface avec un rapport de variation volumique inférieur à 1. En cas d'ajout dans l'alliage d'âme, les éléments tels que Mg, Li, Be, Ca, Ce, La, Y et Zr devraient avoir une teneur comprise entre 0,01 et 2 %. En cas d'ajout dans l'alliage de plaquage, ces éléments devraient être compris entre 0,001 et 0,03%. Les éléments Bi, Li, Ca et Mg semblent également intéressants, notamment pour améliorer la mouillabilité de la surface.

Le brevet EP3176273B1 divulgue une composition d'alliage d'âme avec Mg entre 0,35 et 0,8 % et un alliage de plaquage 4xxx avec des ajouts de Bi entre 0,001 et 0,05 %, ainsi qu'une limitation stricte des éléments facilement oxydables contenus dans l'alliage de plaquage. L'yttrium est cité parmi ces éléments facilement oxydables dont la teneur ne doit pas dépasser 0,01 %. Les autres éléments à limiter sont Mg, Be, Ca, Li, Na, La et Ce. Il est dit que ces éléments s'oxyderaient pendant le processus de fabrication et/ou de brasage, ce qui dégraderait les performances de brasage.

WO 2018/184806 A1 divulgue une tôle de brasage en aluminium convenant au brasage sans flux dans une atmosphère contrôlée.

Il existe également d'autres solutions (décrites par exemple dans les demandes WO03043777, WO200238326 ou encore WO2004054750), mais qui sont chères et compliquées à mettre en oeuvre, car elles supposent l'ajout d'une ou plusieurs couches supplémentaires, avec une composition très spécifique, le plus souvent placée(s) à l'extérieur de la couche de brasage par rapport à l'âme.

La solution proposée dans la présente demande diffère de l'art antérieur au moins en ce qu'elle concerne des ajouts simultanés d'yttrium et d'étain dans l'alliage de placage, sans aucune addition de ces éléments dans l'alliage d'âme, ainsi que par l'absence de couches supplémentaires très spécifiques à l'extérieur de la couche de brasage par rapport à l'âme. Selon l'application envisagée, l'alliage peut contenir du Mg (pour le brasage sans flux) ou non (pour le brasage avec une quantité de flux réduite).

### EXPOSE DE L'INVENTION

La solution divulguée dans la présente demande a plusieurs avantages, et notamment :
- une étape supplémentaire de décapage n'est pas nécessaire à la fin de la fabrication de la bande ou tôle selon la présente invention ;
- la composition de la couche de brasage selon la présente invention permet de réaliser un brasage sans flux, en particulier en combinaison avec une couche d'âme ayant une quantité de Mg supérieure à 0,1 % et jusqu'à 0,6% en masse. De préférence, la couche d'âme a une quantité maximale de Mg jusqu'à 0,35 %, voire jusqu'à 0,25 % en masse.

Cette variante avec une âme présentant un Mg < 0,35 % est tolérante aux résidus de flux potentiellement présents dans les fours de brasage. En effet, les fours qui sont habituellement utilisés pour réaliser des brasages avec flux peuvent avoir des résidus de flux. Cette variante présente alors l'avantage de pouvoir utiliser, pour réaliser un brasage sans flux, un four qui est habituellement utilisé pour les brasages avec flux. Cela présente l'avantage d'éviter d'avoir à utiliser soit un four complètement nettoyé avant de pratiquer un brasage sans flux, soit un four dédié au brasage sans flux.

L'invention a pour objet une bande ou tôle de brasage comprenant, de préférence constituée de :
- une couche d'âme en alliage d'aluminium, de préférence de type 3xxx ;
- une couche de brasage en alliage d'aluminium, de préférence de type 4xxx, plaquée sur au moins une face de la couche d'âme ;
- éventuellement une couche intermédiaire en alliage d'aluminium, de préférence de type 3xxx, plaquée sur au moins une face entre la couche d'âme et la couche de brasage ;
- éventuellement une couche de protection contre la corrosion sur l'éventuelle face de la couche d'âme sans couche de brasage ;
caractérisée en ce que l'alliage de la couche de brasage comprend, en pourcentages massiques : de 7 à 13 % de Si, au plus 0,8 % de Fe, au plus 0,45 % de Cu, au plus 0,20 % de Mn, au plus 0,15 % de Mg, au plus 0,20 % de Zn, au plus 0,20 % de Ti, au plus 0,04 % de Bi, de 0,01 à 0,10 % de Y, de 0,01 à 0,10 % de Sn, reste aluminium et impuretés.

L'invention a également pour objet l'utilisation d'une bande ou tôle de brasage selon la présente invention, dans un procédé de brasage sans flux ou avec une quantité réduite de flux pour la fabrication d'échangeurs thermiques.

### FIGURES

[Fig. 1] La Figure 1 est une photo montrant l'échantillon utilisé pour les tests de brasage avec quantité réduite de flux des exemples.
[Fig. 2] La Figure 2 est une photo montrant l'échantillon utilisé pour les tests de brasage sans flux des exemples.
[Fig. 3] La Figure 3 est un schéma du montage pour le test de résistance à la corrosion des exemples.
[Fig. 4] La Figure 4 est un graphique montrant les résultats des tests de résistance à la corrosion des exemples.

### DESCRIPTION DETAILLEE DE L'INVENTION

Sauf mention contraire, toutes les indications concernant la composition chimique des alliages sont exprimées comme un pourcentage en masse basé sur la masse totale de l'alliage.

La désignation des alliages se fait en conformité avec les règlements de The Aluminium Association, connus de l'homme du métier.

Les définitions des états métallurgiques sont indiquées dans la norme européenne EN 515.

La solution telle que décrite dans la présente demande est une bande ou une tôle de brasage, par exemple pour le brasage d'échangeurs thermiques, qui peut être brasée dans un four conventionnel de brasage sous atmosphère contrôlée (CAB), en l'absence de flux ou avec une quantité réduite de flux, et même en présence de flux dans certaines conditions.

Dans la présente demande, les termes « flux réduit » et « quantité réduite de flux » signifient l'utilisation d'une quantité de flux inférieure à 5 g/m² en moyenne, de préférence inférieure à 2,5 g/m² en moyenne, plus préférentiellement inférieure à 1 g/m² en moyenne. Les grammes exprimés correspondent à la matière sèche de flux après étuvage, par exemple à 300°C pendant 1-2 minutes ou à 90°C pendant 10-15 minutes. Il est à noter que la notion de flux réduit peut aussi couvrir les procédés dans lesquels le flux n'est appliqué que sur certaines parties de l'objet à braser et/ou sur une seule face. Le flux comprend généralement du fluor, du potassium et éventuellement un liant, généralement organique et généralement jusqu'à 34 % de liant par rapport à la masse totale de flux. A titre d'exemple, le flux vendu sous la marque NOCOLOK^{®} est un sel de fluorure de potassium de formule générale KₓAlF_{y}, dans laquelle x est de 1 à 3 et y de 4 à 6.

Dans la présente demande, les termes « atmosphère contrôlée » signifient une atmosphère ayant un gaz majoritaire, par exemple azote ou argon, et ayant une quantité limitée d'O₂, comprenant de préférence moins de 150 ppm, plus préférentiellement moins de 100 ppm, encore plus préférentiellement moins de 50 ppm, et encore plus préférentiellement moins de 20 ppm d'oxygène.

### COUCHE D'AME

L'alliage de la couche d'âme de la bande ou tôle de brasage selon la présente invention est de préférence de type AA3xxx.

De préférence, l'alliage de la couche d'âme comprend, en pourcentages massiques :
Si : au plus 0,8 %, de préférence au plus 0,6 %, plus préférentiellement au plus 0,5 %, et encore plus préférentiellement au plus 0,25 % ;
Fe : au plus 0,5 %, de préférence au plus 0,4 %, plus préférentiellement au plus 0,3 % ;
Cu : au plus 1,2 %, de préférence de 0,20 à 1,2 %, plus préférentiellement de 0,25 à 1,1 %, plus préférentiellement de 0,3 à 1,0 %, plus préférentiellement de 0,5 à 1,0 %, et encore plus préférentiellement de 0,5 à 0,8 % ;
Mn : de 0,8 à 2,2 %, de préférence de 0,9 à 2,1 %, plus préférentiellement de 1,0 à 2,0 %, plus préférentiellement de 1,2 à 1,8 %, encore plus préférentiellement de 1,2 à 1,65 % ;
Mg : au plus 0,6 %, de préférence au plus 0,35 %, plus préférentiellement au plus 0,25 % ;
Zn : au plus 0,30 %, de préférence au plus 0,25 %, plus préférentiellement au plus 0,20 %, et encore plus préférentiellement moins de 0,05 % ;
Ti : au plus 0,30 %, de préférence au plus 0,25 %, plus préférentiellement au plus 0,20 %, encore plus préférentiellement au plus 0,14 %, et encore plus préférentiellement au plus 0,12 % ;

Reste aluminium et impuretés.

Les impuretés sont de préférence présentes à raison de moins de 0,05 % chacune et moins de 0,15 % au total.

De préférence, la limite inférieure de Ti est supérieure ou égale à 0,05 %.

De préférence, la proportion massique de Zr dans l'alliage de la couche d'âme est inférieure à 0,04 %, préférentiellement inférieure à 0,02 %.

Selon une variante, l'alliage de la couche d'âme comprend du Mg, de préférence de 0,05 à 0,35 % en masse.

Selon une variante, la proportion massique de Mn dans l'alliage de la couche d'âme est strictement supérieure à 1,2 %.

Selon une première variante de l'invention, l'alliage de la couche d'âme comprend, en pourcentages massiques :
Si : au plus 0,5 %, de préférence au plus 0,4 %, plus préférentiellement au plus 0,3 %, et encore plus préférentiellement au plus 0,2 % ;
Fe : au plus 0,5 %, de préférence au plus 0,4 %, plus préférentiellement au plus 0,3 %, encore plus préférentiellement au plus 0,25 % ;
Cu : de 0,40 à 1,2 %, de préférence de 0,45 à 1,1 %, plus préférentiellement de 0,5 à 1,0 % ; Mn : de 0,8 à 1,7 %, de préférence de 0,9 à 1,6 %, plus préférentiellement de 1,0 à 1,5 % ;
Mg : au plus 0,04 %, de préférence au plus 0,03 %, plus préférentiellement au plus 0,02 % ;
Zn : au plus 0,30 %, de préférence au plus 0,25 %, plus préférentiellement au plus 0,20 %, et encore plus préférentiellement moins de 0,05 % ;
Ti : au plus 0,30 %, de préférence au plus 0,25 %, plus préférentiellement au plus 0,20 %, encore plus préférentiellement au plus 0,14 %, et encore plus préférentiellement au plus 0,12 %;

Reste aluminium et impuretés.

Les impuretés sont de préférence présentes à raison de moins de 0,05 % chacune et moins de 0,15 % au total.

De préférence, la limite inférieure de Ti est supérieure ou égale à 0,05 %.

De préférence, la couche d'âme selon la première variante est utilisée pour un brasage avec une quantité réduite de flux, et non pas un brasage sans flux.

Selon une deuxième variante de l'invention, l'alliage de la couche d'âme comprend, en pourcentages massiques :
Si : au plus 0,5 %, de préférence au plus 0,4 %, plus préférentiellement au plus 0,3 %, et encore plus préférentiellement au plus 0,2 % ;
Fe : au plus 0,5 %, de préférence au plus 0,4 %, plus préférentiellement au plus 0,3 %, encore plus préférentiellement au plus 0,25 % ;
Cu : de 0,50 à 1,2 %, de préférence de 0,55 à 1,1 %, plus préférentiellement de 0,6 à 1,0 % ; Mn : de 0,8 à 1,7 %, de préférence de 0,9 à 1,6 %, plus préférentiellement de 1,0 à 1,5 % ;
Mg : de 0,05 à 0,35 %, de préférence de 0,075 à 0,30 %, plus préférentiellement de 0,1 à 0,25 % ;
Zn : au plus 0,30 %, de préférence au plus 0,25 %, plus préférentiellement au plus 0,20 %, et encore plus préférentiellement moins de 0,05 % ;
Ti : au plus 0,30 %, de préférence au plus 0,25 %, plus préférentiellement au plus 0,20 %, encore plus préférentiellement au plus 0,14 %, et encore plus préférentiellement au plus 0,12 %;

Reste aluminium et impuretés.

Les impuretés sont de préférence présentes à raison de moins de 0,05 % chacune et moins de 0,15 % au total.

De préférence, la limite inférieure de Ti est supérieure ou égale à 0,05 %.

Selon une troisième variante de l'invention, l'alliage de la couche d'âme comprend, en pourcentages massiques :
Si : au plus 0,8 %, de préférence au plus 0,7 %, plus préférentiellement au plus 0,6 % ;
Fe : au plus 0,5 %, de préférence au plus 0,4 %, plus préférentiellement au plus 0,3 % ;
Cu : de 0,20 à 0,95 %, de préférence de 0,25 à 0,8 %, plus préférentiellement de 0,3 à 0,7 % ;
Mn : de 1,3 à 2,2 %, de préférence de 1,4 à 2,1 %, plus préférentiellement de 1,5 à 2,0 % ;
Mg : de 0,2 à 0,8 %, de préférence de 0,3 à 0,7 %, plus préférentiellement de 0,4 à 0,6 % ;
Zn : au plus 0,30 %, de préférence au plus 0,25 %, plus préférentiellement au plus 0,20 %, et encore plus préférentiellement moins de 0,05 % ;
Ti : au plus 0,30 %, de préférence au plus 0,25 %, plus préférentiellement au plus 0,20 %, encore plus préférentiellement au plus 0,14 %, et encore plus préférentiellement au plus 0,12 % ;

### Reste aluminium et impuretés.

Les impuretés sont de préférence présentes à raison de moins de 0,05 % chacune et moins de 0,15 % au total.

De préférence, la limite inférieure de Ti est supérieure ou égale à 0,05 %.

### COUCHE INTERMEDIAIRE

La bande ou tôle de brasage selon la présente invention peut comprendre au moins une couche intermédiaire. L'alliage de cette couche intermédiaire est généralement un alliage dit sacrificiel, qui est destiné à améliorer la résistance à la corrosion de l'alliage d'âme.

L'alliage de la couche intermédiaire peut par exemple être de type 3xxx, 1xxx, ou encore 7xxx. On peut citer par exemple les alliages AA3003, AA3207 ou encore AA1050.

De préférence, la couche intermédiaire ne comprend pas de Zn, ou alors à titre d'impureté dans des quantités inférieures à 0,05 %.

Mais selon une variante, la couche intermédiaire peut comprendre du Zn, préférentiellement moins de 2 % de Zn, plus préférentiellement moins de 1 % en masse.

De préférence, la quantité de Mg dans la couche intermédiaire est inférieure à 0,10 %, préférentiellement inférieure à 0,075 %, plus préférentiellement inférieure à 0,05 % en masse. A titre d'illustration, les alliages cités ci-avant ont la composition suivante, en pourcentages massiques :
- AA3003 : moins de 0.6 % Si ; moins de 0.7 % Fe ; de 0.05 à 0.20 % Cu ; de 1.0 à 1.5 % Mn ; moins de 0.10 % Zn, impuretés moins de 0.05 % chacune et moins de 0.15 % au total ; reste AI.
- AA3207 : moins de 0.30 % Si ; moins de 0.45 % Fe ; moins de 0.10 % Cu ; de 0.40 à 0.8 % Mn ; moins de 0.10 % Mg ; moins de 0.10 % Zn, impuretés moins de 0.05 % chacune et moins de 0.15 % au total ; reste AI.
- AA1050 : moins de 0.25 % Si ; moins de 0.40 % Fe ; moins de 0.05 % Cu ; moins de 0.05 % Mn ; moins de 0.05 % Mg ; moins de 0.05 % Zn, moins de 0.03 % Ti ; moins de 0.05 % V ; impuretés moins de 0.03 % chacune ; au moins 99.50 % AI.

### COUCHE DE BRASAGE

La bande ou tôle selon la présente invention comprend au moins une couche de brasage. L'alliage de la couche de brasage de la bande ou tôle de brasage selon la présente invention est de préférence de type 4xxx. On peut citer par exemple, et de préférence, les alliages de type AA4045 ou AA4343, avec des ajouts volontaires de Y et Sn et une limitation de la quantité de Bi. De préférence, l'alliage de la couche de brasage de la bande ou tôle de brasage selon la présente invention comprend au plus 0,03 %, de préférence au plus 0,02 % de Bi.

De préférence, l'alliage de la couche de brasage de la bande ou tôle de brasage selon la présente invention comprend Sn : de 0,015 à 0,08 %, de préférence de 0,02 à 0,065 %.

De préférence, l'alliage de la couche de brasage de la bande ou tôle de brasage selon la présente invention comprend Y : de 0,015 à 0,08 %, de préférence de 0,02 à 0,065 %.

L'alliage de la couche de brasage comprend, en pourcentages massiques :
Si : de 7 à 13 %, de préférence de 8 à 12 %, plus préférentiellement de 9 à 11 % ;
Fe : au plus 0,8 %, de préférence au plus 0,7 %, plus préférentiellement au plus 0,6 % ;
Cu : au plus 0,45 %, de préférence au plus 0,35 %, plus préférentiellement au plus 0,25 % ;
Mn : au plus 0,20 %, de préférence au plus 0,15 %, plus préférentiellement au plus 0,10 % ;
Mg : au plus 0,15 %, de préférence au plus 0,10 %, plus préférentiellement au plus 0,05 %,
encore plus préférentiellement au plus 0,025 % ;
Zn : au plus 0,20 %, de préférence au plus 0,15 %, plus préférentiellement au plus 0,10 % ;
Ti : au plus 0,20 %, de préférence au plus 0,15 %, plus préférentiellement au plus 0,10 % ;
Bi : au plus 0,04 %, de préférence au plus 0,03 %, plus préférentiellement au plus 0,02 % ;
Y : 0,01 à 0,10 %, de préférence 0,015 à 0,08 %, plus préférentiellement 0,02 à 0,065 % ;
Sn : 0,01 à 0,10 %, de préférence 0,015 à 0,08 %, plus préférentiellement 0,02 à 0,065 % ;

Reste aluminium et impuretés.

Les impuretés sont de préférence présentes à raison de moins de 0,05 % chacune et moins de 0,15 % au total.

### BANDE OU TOLE

La bande ou tôle selon la présente invention peut présenter une configuration avec plusieurs couches, et en particulier à 2, 3, 4 ou 5 couches.

La configuration avec deux couches comprend une âme plaquée avec une couche de brasage sur une seule face.

La configuration avec trois couches comprend :
- soit une couche d'âme plaquée sur ses deux faces avec une couche de brasage ;
- soit une couche d'âme plaquée sur une seule face avec une couche intermédiaire et une couche de brasage ;
- soit une couche d'âme plaquée sur une première face avec une couche de brasage et sur l'autre face avec une couche de protection pour améliorer la résistance à la corrosion, par exemple en alliage de type 1xxx ou 7xxx.

La configuration avec quatre couches comprend :
- soit une couche d'âme plaquée sur une première face avec une couche intermédiaire et une couche de brasage et sur l'autre face avec une couche de brasage ;
- soit une couche d'âme plaquée sur une première face avec une couche intermédiaire et une couche de brasage et sur l'autre face avec une couche de protection pour améliorer la résistance à la corrosion, par exemple en alliage de type 1xxx ou 7xxx.

La configuration avec cinq couches comprend une couche d'âme plaquée sur ses deux faces avec une couche intermédiaire et une couche de brasage.

De préférence, la bande ou tôle selon la présente invention ne comprend pas d'autres couches que celles décrites ci-avant, c'est-à-dire une couche d'âme, une ou deux couches de brasage, éventuellement une ou deux couches intermédiaires et éventuellement une couche de protection.

De préférence, la couche de brasage est la couche la plus externe de la bande ou tôle selon l'invention, c'est-à-dire qu'aucune autre couche ne la recouvre et qu'elle a de préférence une face non-recouverte par une autre couche.

Selon une première variante, la bande ou tôle selon l'invention ne comprend pas de couche intermédiaire. Cette variante est en particulier adaptée pour les applications dans le domaine des radiateurs, des condenseurs à eau ou des refroidisseurs de batterie pour les véhicules électriques.

Selon une deuxième variante, la bande ou tôle selon l'invention comprend au moins une couche intermédiaire. Cette variante est en particulier adaptée pour les applications dans le domaine des refroidisseurs d'air de suralimentation (RAS) ou des évaporateurs. Les RAS sont généralement situés dans la boucle de recirculation (EGR) des moteurs diesel, qui doivent notamment résister à la corrosion acide. Ces échangeurs sont également appelés « Water Charge Air Cooler » ou « water CAC » en anglais.

De préférence, la couche de protection pour améliorer la résistance à la corrosion ne comprend pas de Zn ou alors à titre d'impureté selon une proportion massique inférieure à 0,05 %

De préférence, la couche de protection pour améliorer la résistance à la corrosion est un alliage de type AA7xxx, ayant préférentiellement une proportion massique de Mn inférieure à 0,1 %, par exemple un alliage de type AA7072.

Selon une variante, la bande ou tôle selon la présente invention ne comprend pas de couche de protection pour améliorer la résistance à la corrosion.

Les couches telles que décrites ci-avant peuvent être éventuellement homogénéisées.

Elles sont généralement assemblées par colaminage, par laminage à chaud et/ou laminage à froid, selon une pratique connue du l'homme du métier. Avant le laminage à chaud, la bande ou tôle est réchauffée, selon une pratique connue de l'homme du métier. Elle est éventuellement soumise à un recuit intermédiaire avant ou pendant le laminage à froid, mais de préférence il n'y a pas de recuit intermédiaire.

Le recuit final de la tôle ou bande selon la présente invention peut permettre d'obtenir un état métallurgique H24 ou O.

La bande ou tôle selon la présente invention peut éventuellement être décapée, avec une solution acide ou alcaline, selon une pratique connue de l'homme du métier. La présente invention permet cependant de s'affranchir d'un décapage sans diminution de la qualité du brasage sans flux ou avec une quantité de flux réduite. De préférence, la bande ou tôle selon la présente invention n'est pas décapée.

### BRASAGE

Le brasage peut s'effectuer sans flux ou avec une quantité réduite de flux, par exemple sous atmosphère contrôlée, par exemple d'azote ou d'argon, à une température comprise de 580 à 620°C, qui permet la fusion de l'alliage de brasage, mais assure également la mise en solution de l'alliage d'âme.

Pour les alliages d'âme ayant une quantité significative de Mg (par exemple supérieure à 0,2 % en masse), un refroidissement rapide, par exemple à l'air pulsé, peut être conseillé, généralement suivi d'un revenu de la pièce assemblée à une température comprise de 80 à 250°C.

Il est à noter que la bande ou tôle selon la présente invention peut être brasée dans une large gamme de fours, dédiés pour le brasage sans flux ou non. De préférence, le four utilisé est dédié au brasage sans flux.

Il est également à noter que la présente invention pourrait être utilisée dans un four de brasage sous atmosphère contrôlée (par exemple comprenant moins de 20 ppm d'oxygène) ou alors dans un four ayant une atmosphère dite dégradée (par exemple comprenant jusqu'à 50, 100 voire 150 ppm d'oxygène). De préférence, le four de brasage fonctionne sous atmosphère contrôlée comprenant moins de 20 ppm d'oxygène. De préférence, le four de brasage fonctionne avec un point de rosée inférieur à -20°C, plus préférentiellement inférieur à -30°C, encore plus préférentiellement inférieur à -35°C, et encore plus préférentiellement inférieur à -40°C.

### EXEMPLES

### 1. Brasage avec une quantité réduite de flux (5 g/m²)

Quatre bobines industrielles ont été produites ayant la configuration suivante : couche de brasage 4xxx (7,5 % de l'épaisseur totale) / couche intermédiaire AA3003 (10 % de l'épaisseur totale) / couche d'âme 3xxx-1 / couche de brasage 4xxx (7,5 % de l'épaisseur totale). Les couches en AA3003 et en 4xxx n'ont pas été homogénéisées. La couche d'âme a été homogénéisées à une température de 580 à 620°C pendant 1 à 24 heures. Les tôles ont été laminées à chaud jusqu'à une épaisseur de 2,3 mm totale, puis laminées à froid jusqu'à une épaisseur de 480 µm totale, sans recuit intermédiaire. Le recuit final a été réalisé à une température inférieure à 400°C jusqu'à un état métallurgique O. La composition des différentes couches utilisées est donnée dans le Tableau 1 ci-après, en pourcentages massiques.

**[Tableau 1]**

| | **4045-1** | **4xxx-Ref1** | **4xxx-Ref2** | **4xxx-1** | **3xxx-1** | **AA3003** |
|---|---|---|---|---|---|---|
| **Si** | 9.8 | 10.0 | 9.8 | 9.7 | 0.2 | 0.22 |
| **Fe** | 0.25 | 0.11 | 0.09 | 0.09 | 0.14 | 0.6 |
| **Cu** | 0.01 | 0.19 | 0.19 | 0.19 | 0.65 | 0.08 |
| **Mn** | 0.02 | 0.002 | 0.002 | 0.002 | 1.37 | 1.21 |
| **Mg** | 0.001 | 0.001 | 0.001 | 0.001 | - | 0.007 |
| **Cr** | - | 0.001 | 0.001 | 0.001 | - | - |
| **Ni** | 0.01 | 0.005 | 0.005 | 0.004 | - | - |
| **Zn** | - | 0.002 | 0.002 | 0.002 | - | - |
| **Ti** | 0.04 | 0.03 | 0.03 | 0.03 | 0.08 | 0.08 |
| **Sr** | 0.012 | 0.012 | 0.045 | - | - | - |
| **Bi** | - | 0.13 | - | - | - | - |
| **La** | - | - | 0.058 | - | - | - |
| **Y** | - | - | - | 0.06 | - | - |
| **Sn** | - | - | - | 0.05 | - | - |

Une étape de décapage avec une solution sulfo-fluorique (H₂SO₄ 8 g/l ; HF 0,4 g/l, 50°C) a été réalisée pour l'une des configurations comprenant la couche de brasage à base de 4045-1 avant le brasage. Le décapage a été réalisé sur une ligne avançant à une vitesse de 10 m/min. La surface de l'échantillon a été nettoyée puis décapée par pulvérisation avec la solution sulfo-fluorique décrit ci-avant. L'échantillon a enfin été rincé à l'eau dé-ionisée.

Les différentes configurations ont ensuite été testées du point de vue de la qualité du brasage dans des conditions de brasage avec une quantité réduite de flux. Les échantillons ont été fluxés sur une seule face avec environ 1,3-1,8 g/m² de flux Nocolok^{®}. La quantité moyenne de flux pour un échantillon complet était donc d'environ 0,65-0,8 g/m² de flux.

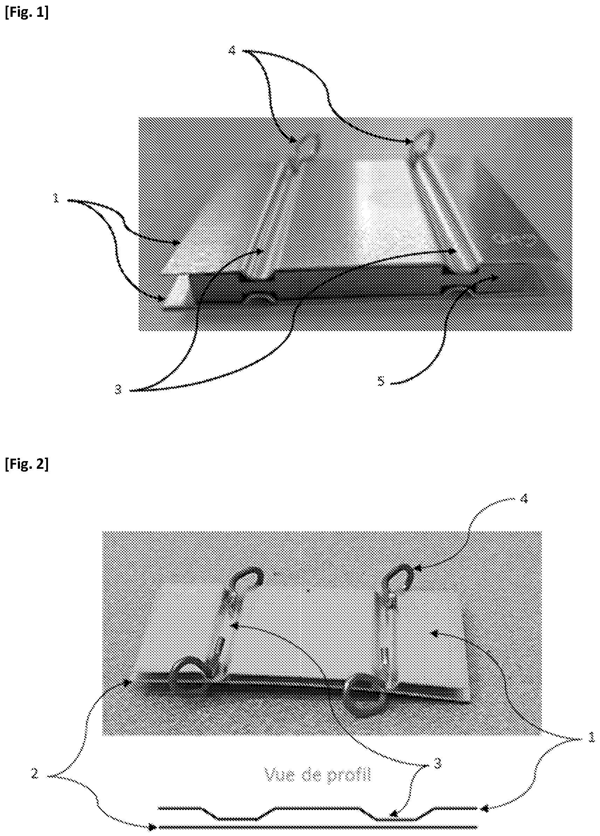

Le test de brasage a été réalisé selon le protocole suivant, qui permet de simuler le brasage de pièces embouties. Pour ce faire, des feuilles de 50 mm x 60 mm ont été embouties en l'absence de lubrifiant pour ajouter deux lignes longitudinales telles qu'illustrées dans la Figure 1. Après emboutissage, les feuilles ont été dégraissées avec une solution d'acétone puis séchées à l'air. Deux feuilles embouties ayant la même composition ont ensuite été fixées l'une à l'autre à l'aide de goupilles en inox, avec une cale positionnée à une extrémité de l'assemblage, comme illustré dans la Figure 1. La cale était en acier et mesurait 60 mm de long, 5 mm de large et 0,25 mm d'épaisseur. Dans la Figure 1, la référence 1 correspond aux feuilles embouties, la référence 3 à deux lignes embouties, la référence 4 à des goupilles et la référence 5 à la cale en inox. Les feuilles ainsi assemblées ont été brasées avec une quantité réduite de flux et avec une quantité d'oxygène maintenue inférieure à 5 ppm. Le cycle de brasage était le suivant :
- première montée en température jusqu'à environ 575-580°C avec une rampe d'environ 24-28°C/min ;
- deuxième montée en température jusqu'à environ 600°C avec une rampe d'environ 2,5°C/min ;
- maintien pendant 3 minutes à 600°C +/- 2°C ;
- refroidissement jusqu'à environ 400°C avec une rampe d'environ 24-28°C/min.

La longueur de chaque joint de brasage a ensuite été mesurée. Pour chaque configuration, trois échantillons ont été réalisés. Pour chaque échantillon, deux mesures ont été faites au niveau des deux lignes longitudinales embouties.

Les résultats du test de brasage sont présentés dans le Tableau 2 ci-après.

**[Tableau 2]**

| | **4xxx** | **Décapage** | **Longueur brasée (mm)** | **% de longueur brasée** |
|---|---|---|---|---|
| **Ref-1** | 4045-1 | non | 21.1 | 46.9 |
| **Ref-2** | 4045-1 | oui | 26.3 | 58.4 |
| **Ref-3** | 4xxx-Ref1 | non | 23.5 | 52.2 |
| **Ref-4** | 4xxx-Ref2 | non | 20.6 | 45.8 |
| **Comp-1** | 4xxx-1 | non | 31.8 | 70.6 |

D'après le Tableau 2 ci-avant, la couche de brasage selon la présente invention (Comp-1) permet de garantir une bonne qualité de brasage avec une quantité réduite de flux. Il est à noter que ce n'est pas le cas pour les autres compositions testées, sauf pour Ref-2 qui est un peu meilleure que les autres références, tout en restant moins bonne que la composition selon la présente invention, et qui a nécessité une étape de décapage avant le brasage.

La bande ou tôle de brasage selon la présente invention permet donc de s'affranchir d'une étape de décapage avant de réaliser un brasage avec une quantité réduite de flux.

### 2. Brasage sans flux

Différentes configurations ont été testées à l'échelle laboratoire, en faisant varier la nature de la couche de brasage, la nature de l'âme et l'état métallurgique. Chaque configuration comprenait une couche d'âme plaquée sur deux faces avec une couche de brasage représentant chacune 7,5 % de l'épaisseur totale. L'épaisseur totale était de 400 µm.

Les échantillons ont été fabriqués de la manière suivante :
- homogénéisation avant laminage (montée en température avec une rampe de 50°C/h ; maintien pendant 8h à 600°C ; refroidissement avec une rampe de 15°C/h jusqu'à 480°C ; puis sortie du four et refroidissement à l'air ambiant) ;
- laminage à chaud de 55 à 3,6 mm d'épaisseur ;
- laminage à froid de 3,6 à 0,4 mm d'épaisseur ;
- pour les échantillons à l'état O : recristallisation état O (montée en température avec une rampe de 50°C/h jusqu'à 360°C ; maintien pendant 2h à 360°C ; refroidissement à l'air) ;
- pour les échantillon à l'état H24 : recristallisation état H24 (montée en température avec une rampe de 50°C/h jusqu'à 320°C ; maintien pendant 1h à 320°C ; refroidissement à l'air).

Les compositions des différentes couches utilisées sont données dans le Tableau 3 ci-après, en pourcentages massiques.

**[Tableau 3]**

| | **4xxx-Ref3** | **4045-2** | **4xxx-2** | **3xxx-2** | **3xxx-3** |
|---|---|---|---|---|---|
| **Si** | 9.7 | 9.8 | 9.5 | 0.2 | 0.49 |
| **Fe** | 0.23 | 0.20 | 0.19 | 0.15 | 0.15 |
| **Cu** | 0.21 | 0.006 | - | 0.77 | 0.50 |
| **Mn** | 0.01 | 0.02 | 0.01 | 1.36 | 1.64 |
| **Mg** | - | <0.014 | <0.014 | 0.16 | 0.51 |
| **Zn** | - | - | - | - | - |
| **Ti** | 0.02 | 0.02 | 0.02 | 0.08 | 0.08 |
| **Bi** | 0.14 | - | - | - | - |
| **Sr** | 0.010 | 0.018 | - | - | - |
| **Li** | - | - | - | - | - |
| **Y** | - | - | 0.05 | - | - |
| **Sn** | - | - | 0.061 | - | - |

Chaque configuration a ensuite été testée du point de vue de sa qualité de brasage sans flux, selon le protocole suivant, qui permet de simuler le brasage de pièces embouties. Pour ce faire, des feuilles de 50 mm x 60 mm ont été embouties en l'absence de lubrifiant pour ajouter deux lignes longitudinales telles qu'illustrées dans la Figure 2. Après emboutissage, les feuilles ont été dégraissées avec une solution d'acétone puis séchées à l'air. Chaque feuille emboutie a ensuite été fixée à une feuille plate ayant la même composition que la feuille emboutie, qui a été préalablement aplatie à l'aide d'une presse. Les deux feuilles ont été fixées ensemble à l'aide de goupilles en inox, telles que représentées dans la Figure 2. Dans la Figure 2, La référence 1 correspond à une feuille emboutie, la référence 2 à une feuille plate, la référence 3 à deux lignes embouties et la référence 4 à des goupilles. Les feuilles ainsi assemblées ont été brasées sans ajout de flux et avec une quantité d'oxygène maintenue inférieure à 5 ppm. Le cycle de brasage était le suivant :
- première montée en température jusqu'à environ 575-580°C avec une rampe d'environ 24-28°C/min ;
- deuxième montée en température jusqu'à environ 600°C avec une rampe d'environ 2,5°C/min ;
- maintien pendant 3 minutes à 600°C +/- 2°C ;
- refroidissement jusqu'à environ 400°C avec une rampe d'environ 24-28°C/min.

La longueur de chaque joint de brasage a ensuite été mesurée. Pour chaque configuration, trois échantillons ont été réalisés. Pour chaque échantillon, deux mesures ont été faites au niveau des deux lignes longitudinales embouties.

Les configurations testées ainsi que les résultats du test de brasage sont présentés dans le Tableau 4 ci-après.

**[Tableau 4]**

| | **4xxx** | **Ame** | **Etat métallurgique** | **Longueur brasée (mm)** | **% de longueur brasée** |
|---|---|---|---|---|---|
| **Ref-5** | 4xxx-Ref3 | 3xxx-2 | O | 0.7 | 1.6 |
| **Ref-6** | 4xxx-Ref3 | 3xxx-3 | O | 9.6 | 21.3 |
| **Ref-7** | 4045-2 | 3xxx-2 | O | 0.4 | 0.9 |
| **Comp-2** | 4xxx-2 | 3xxx-2 | O | 41.8 | 92.9 |
| **Comp-3** | 4xxx-2 | 3xxx-2 | H24 | 42.3 | 94.0 |
| **Comp-4** | 4xxx-2 | 3xxx-3 | O | 43.6 | 96.9 |

Les résultats présentés dans le Tableau 4 ci-avant permettent de montrer que la tôle ou bande selon la présente invention permet de réaliser un brasage sans flux de qualité et bien meilleur qu'avec les compositions de référence, avec plusieurs natures d'alliage d'âme et plusieurs états métallurgiques (O ou H24 dans l'exemple).

L'échantillon Ref-5 a été décapé puis soumis au même test de brasage. Cette configuration (non-illustrée ici) a également permis d'obtenir une bonne qualité de brasage. Aussi, les échantillons de référence semblent avoir besoin d'une étape de décapage pour obtenir des résultats satisfaisants en termes de brasage. La bande ou tôle de brasage selon la présente invention permet donc de s'affranchir d'une étape de décapage avant de réaliser un brasage sans flux.

### 3. Tenue en corrosion

Quatre configurations ont été comparées du point de vue de leur tenue à la corrosion : Ref-7, Ref-7', Comp-2 et Comp-3. Les configurations Ref-7, Comp-2 et Comp-3 correspondent à celles décrites dans le Tableau 4 ci-avant. La configuration Ref-7' correspond à la configuration Ref-7 mais à l'état métallurgique H24 et non pas à l'état O.

La tenue en corrosion a été déterminée en utilisant le protocole suivant :
- préparer pour chaque configuration un échantillon de dimensions 126 mm (sens L) x 90 mm (sens TL), préalablement dégraissé avec un papier absorbant blanc imbibé d'acétone ;
- protéger la face non-testée ainsi que les quatre bords sur une largeur d'environ 0,5 cm avec un adhésif vinyle transparent (par exemple de type 3M vinyl 764) ;
- nettoyer la face à tester avec un papier absorbant imbibé d'acétone :
- placer les échantillons ainsi préparés sur un rack avec une inclinaison d'environ 60° par rapport à l'horizontale ;
- réaliser pour chaque échantillon un test cyclique SWAAT (Sea Water Acidified Acetic Test) selon la norme ASTM G85 A3, comprenant notamment une alternance de phases de brouillard de 30 min et de phases humides de 1h30 à une température de 49°C.

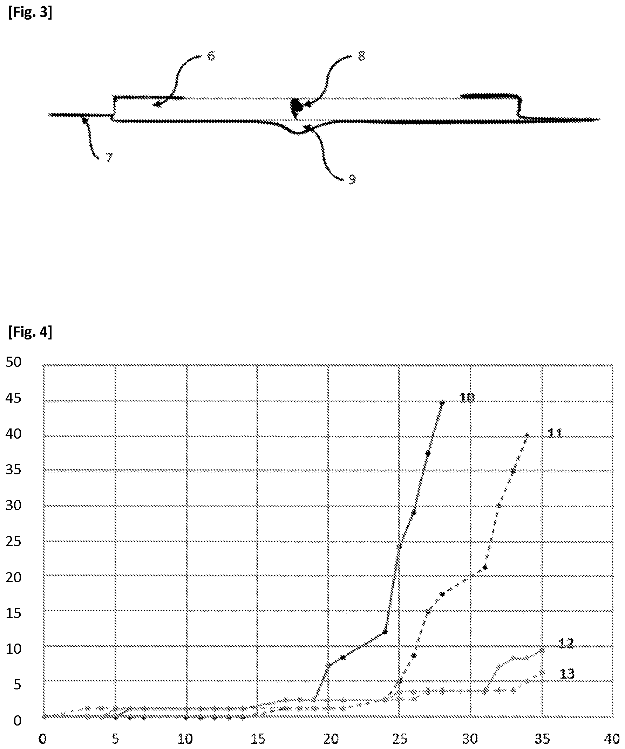

Le nombre de percements a été relevé chaque jour pour chaque échantillon pendant toute la durée du test, soit 35 jours. Les percements étaient visibles au dos de chaque échantillon car ils formaient des cloques dans l'adhésif appliqué sur la face non testée, comme illustré sur la Figure 3. Dans le Figure 3, la référence 6 correspond à l'échantillon ; la référence 7 correspond à l'adhésif ; la référence 8 correspond à une perforation ; la référence 9 correspond à une cloque formée par une perforation.

Les résultats du suivi du nombre de percements sont présentés dans la Figure 4 sous forme d'un graphique du nombre de percements par dm² en fonction du nombre de jours de test. La référence 10 correspond à l'échantillon Ref-7' ; la référence 11 correspond à l'échantillon Ref-7 ; la référence 12 correspond à l'échantillon Comp-3 ; la référence 13 correspond à l'échantillon Comp-2.

D'après la Figure 4, il est visible que le nombre de percements est largement supérieur pour les échantillons de référence Ref-7' et Ref-7 que pour les échantillons selon la présente invention Comp-3 et Comp-2 (moins de 10 percements par dm² pour les échantillons selon la présente invention contre plus de 40 percements par dm² pour les échantillons de référence).

Il est à noter que pour les échantillons de référence, il a fallu arrêter de compter les percements avant la fin des 35 jours de test, car le comptage était devenu impossible à cause du regroupement des cloques causées par des percements trop proches les uns des autres.

D'autre part, des tests ont également été réalisés pour comparer la solution avec et sans décapage. Des résultats équivalents ont été obtenus. La présente invention a donc l'avantage de pouvoir s'affranchir d'une étape supplémentaire de décapage.

## Revendications

1. Bande ou tôle de brasage comprenant, de préférence constituée de :
- une couche d'âme en alliage d'aluminium, de préférence de type 3xxx ;
- une couche de brasage en alliage d'aluminium, de préférence de type 4xxx, plaquée sur au moins une face de la couche d'âme ;
- éventuellement une couche intermédiaire en alliage d'aluminium, de préférence de type 3xxx, plaquée sur au moins une face entre la couche d'âme et la couche de brasage ;
- éventuellement une couche de protection contre la corrosion sur l'éventuelle face de la couche d'âme sans couche de brasage ;
**caractérisée en ce que** l'alliage de la couche de brasage comprend, en pourcentages massiques :
de 7 à 13 % de Si, au plus 0,8 % de Fe, au plus 0,45 % de Cu, au plus 0,20 % de Mn, au plus 0,15 % de Mg, au plus 0,20 % de Zn, au plus 0,20 % de Ti, au plus 0,04 % de Bi, de 0,01 à 0,10 % de Y, de 0,01 à 0,10 % de Sn, reste aluminium et impuretés.

2. Bande ou tôle de brasage selon la revendication 1, **caractérisée en ce que** l'alliage de la couche de brasage comprend au plus 0,03 %, de préférence au plus 0,02 % de Bi.

3. Bande ou tôle de brasage selon la revendication 1 ou 2, **caractérisée en ce que** l'alliage de la couche de brasage comprend :
- Sn : de 0,015 à 0,08 %, de préférence de 0,02 à 0,065 %.

4. Bande ou tôle de brasage selon l'une quelconque des revendications précédentes, **caractérisée en ce que** l'alliage de la couche de brasage comprend :
- Y : de 0,015 à 0,08 %, de préférence de 0,02 à 0,065 %.

5. Bande ou tôle de brasage selon l'une quelconque des revendications précédentes, **caractérisée en ce que** l'alliage de la couche de brasage comprend, en pourcentages massiques :
- Si : de 8 à 12 %, de préférence de 9 à 11 % ;
- Fe : au plus 0,7 %, de préférence au plus 0,6 % ;
- Cu : au plus 0,35 %, de préférence au plus 0,25 % ;
- Mn : au plus 0,15 %, de préférence au plus 0,10 % ;
- Mg : au plus 0,10 %, de préférence au plus 0,05 % ; encore plus préférentiellement au plus 0,025 % ;
- Zn : au plus 0,15 %, de préférence au plus 0,10 % ;
- Ti : au plus 0,15 %, de préférence au plus 0,10 % ;
- Bi : au plus 0,03 %, de préférence au plus 0,02 % ;
- Y : de 0,015 à 0,08 %, de préférence de 0,02 à 0,065 % ;
- Sn : de 0,015 à 0,08 %, de préférence de 0,02 à 0,065 % ;
reste aluminium et impuretés.

6. Bande ou tôle de brasage selon l'une quelconque des revendications précédentes, **caractérisée en ce que** l'alliage de la couche d'âme comprend, en pourcentages massiques :
- Si : au plus 0,8 %, de préférence au plus 0,6 %, plus préférentiellement au plus 0,5 %, encore plus préférentiellement au plus 0,25 % ;
- Fe : au plus 0,5 %, de préférence au plus 0,4 %, plus préférentiellement au plus 0,3 % ;
- Cu : au plus 1,2 %, de préférence de 0,20 à 1,2 %, plus préférentiellement de 0,25 à 1,1 %, plus préférentiellement de 0,3 à 1,0 %, plus préférentiellement de 0,5 à 1,0 %, et encore plus préférentiellement de 0,5 à 0,8 % ;
- Mn : de 0,8 à 2,2 %, de préférence de 0,9 à 2,1 %, plus préférentiellement de 1,0 à 2,0 %, plus préférentiellement de 1,2 à 1,8 %, encore plus préférentiellement de 1,2 à 1,65 % ;
- Mg : au plus 0,6 %, de préférence au plus 0,35 %, plus préférentiellement au plus 0,25 % ;
- Zn : au plus 0,30 %, de préférence au plus 0,25 %, plus préférentiellement au plus 0,20 %, et encore plus préférentiellement moins de 0,05 % ;
- Ti : au plus 0,30 %, de préférence au plus 0,25 %, plus préférentiellement au plus 0,20 %, encore plus préférentiellement au plus 0,14 %, et encore plus préférentiellement au plus 0,12 %;
- reste aluminium et impuretés.

7. Bande ou tôle de brasage selon l'une quelconque des revendications précédentes, **caractérisée en ce qu'**elle comprend une couche intermédiaire, de préférence de type 3xxx, 1xxx ou 7xxx, plus préférentiellement de type AA3003, AA3207 ou AA1050.

8. Bande ou tôle de brasage selon l'une quelconque des revendications précédentes, **caractérisée en ce qu'**elle ne comprend pas d'autres couches que la couche d'âme, ladite une ou deux couches de brasage, ladite éventuelle une ou deux couches intermédiaires et ladite éventuelle couche de protection.

9. Utilisation d'une bande ou tôle de brasage selon l'une quelconque des revendications précédentes, dans un procédé de brasage sans flux ou avec une quantité réduite de flux pour la fabrication d'échangeurs thermiques.

## Patentansprüche

1. Lotband oder -blech, umfassend, bevorzugt bestehend aus:
- einer Kernschicht aus Aluminiumlegierung, bevorzugt vom Typ 3xxx;
- einer Lotschicht aus Aluminiumlegierung, bevorzugt vom Typ 4xxx, die auf mindestens eine Seite der Kernschicht plattiert ist;
- eventuell eine Zwischenschicht aus Aluminiumlegierung, bevorzugt vom Typ 3xxx, die auf mindestens eine Seite zwischen der Kernschicht und der Lotschicht plattiert ist;
- eventuell eine Korrosionsschutzschicht auf der eventuellen Seite der Kernschicht ohne Lotschicht;
**dadurch gekennzeichnet, dass** die Legierung der Lotschicht umfasst, in Massenprozent:
7 bis 13 % Si, höchstens 0,8 % Fe, höchstens 0,45 % Cu, höchstens 0,20 % Mn, höchstens 0,15 % Mg, höchstens 0,20 % Zn, höchstens 0,20 % Ti, höchstens 0,04 % Bi, 0,01 bis 0,10 % Y, 0,01 bis 0,10 % Sn, der Rest Aluminium und Verunreinigungen.

2. Lotband oder -blech nach Anspruch 1, **dadurch gekennzeichnet, dass** die Legierung der Lotschicht höchstens 0,03 %, bevorzugt höchstens 0,02 % Bi umfasst.

3. Lotband oder -blech nach Anspruch 1 oder 2, **dadurch gekennzeichnet, dass** die Legierung der Lotschicht umfasst:
- Sn: 0,015 bis 0,08 %, bevorzugt 0,02 bis 0,065 %.

4. Lotband oder -blech nach einem der vorstehenden Ansprüche, **dadurch gekennzeichnet, dass** die Legierung der Lotschicht umfasst:
- Y: 0,015 bis 0,08 %, bevorzugt 0,02 bis 0,065 %.

5. Lotband oder -blech nach einem der vorstehenden Ansprüche, **dadurch gekennzeichnet, dass** die Legierung der Lotschicht umfasst, in Massenprozent:
- Si: 8 bis 12 %, bevorzugt 9 bis 11 %;
- Fe: höchstens 0,7 %, bevorzugt höchstens 0,6 %;
- Cu: höchstens 0,35 %, bevorzugt höchstens 0,25 %;
- Mn: höchstens 0,15 %, bevorzugt höchstens 0,10 %;
- Mg: höchstens 0,10 %, bevorzugt höchstens 0,05 %; noch bevorzugter höchstens 0,025 %;
- Zn: höchstens 0,15 %, bevorzugt höchstens 0,10 %;
- Ti: höchstens 0,15 %, bevorzugt höchstens 0,10 %;
- Bi: höchstens 0,03 %, bevorzugt höchstens 0,02 %;
- Y: 0,015 bis 0,08 %, bevorzugt 0,02 bis 0,065 %;
- Sn: 0,015 bis 0,08 %, bevorzugt 0,02 bis 0,065 %;
der Rest Aluminium und Verunreinigungen.

6. Lotband oder -blech nach einem der vorstehenden Ansprüche, **dadurch gekennzeichnet, dass** die Legierung der Kernschicht umfasst, in Massenprozent:
- Si: höchstens 0,8 %, bevorzugt höchstens 0,6 %, bevorzugter höchstens 0,5 %, noch bevorzugter höchstens 0,25 %;
- Fe: höchstens 0,5 %, bevorzugt höchstens 0,4 %, bevorzugter höchstens 0,3 %;
- Cu: höchstens 1,2 %, bevorzugt 0,20 bis 1,2 %, bevorzugter 0,25 bis 1,1 %, bevorzugter 0,3 bis 1,0 %, bevorzugter 0,5 bis 1,0 %, und noch bevorzugter 0,5 bis 0,8 %;
- Mn: 0,8 bis 2,2 %, bevorzugt 0,9 bis 2,1 %, bevorzugter 1,0 bis 2,0 %, bevorzugter 1,2 bis 1,8 %, noch bevorzugter 1,2 bis 1,65 %;
- Mg: höchstens 0,6 %, bevorzugt höchstens 0,35 %, bevorzugter höchstens 0,25 %;
- Zn: höchstens 0,30 %, bevorzugt höchstens 0,25 %, bevorzugter höchstens 0,20 % und noch bevorzugter weniger als 0,05 %;
- Ti: höchstens 0,30 %, bevorzugt höchstens 0,25 %, bevorzugter höchstens 0,20 %, noch bevorzugter höchstens 0,14 % und noch bevorzugter höchstens 0,12 %;
- der Rest Aluminium und Verunreinigungen.

7. Lotband oder -blech nach einem der vorstehenden Ansprüche, **dadurch gekennzeichnet, dass** es eine Zwischenschicht umfasst, bevorzugt vom Typ 3xxx, 1xxx oder 7xxx, bevorzugter vom Typ AA3003, AA3207 oder AA1050.

8. Lotband oder -blech nach einem der vorstehenden Ansprüche, **dadurch gekennzeichnet, dass** es keine anderen Schichten als die Kernschicht, die eine oder zwei Lotschichten, die eventuelle(n) eine oder zwei Zwischenschichten und die eventuelle Schutzschicht umfasst.

9. Verwendung eines Lotbandes oder -blechs nach einem der vorstehenden Ansprüche in einem Verfahren zum Löten ohne Flussmittel oder mit einer reduzierten Menge an Flussmittel zur Herstellung von Wärmetauschern.

## Claims

1. Brazing strip or sheet comprising, preferably consisting of:
- a core layer made of aluminum alloy, preferably 3xxx type;
- a brazing layer made of aluminum alloy, preferably 4xxx type, cladded on at least one face of the core layer;
- optionally an intermediate layer made of aluminum alloy, preferably 3xxx type, cladded on at least one face between the core layer and the brazing layer;
- optionally a corrosion protective layer on the optional face of the core layer with no brazing layer;
**characterized in that** the brazing layer alloy comprises, in mass percentages:
from 7 to 13% Si, at most 0.8% Fe, at most 0.45% Cu, at most 0.20% Mn, at most 0.15% Mg, at most 0.20% Zn, at most 0.20% Ti, at most 0.04% Bi, from 0.01 to 0.10% Y, from 0.01 to 0.10% Sn, remainder aluminum and impurities.

2. Brazing strip or sheet according to claim 1, **characterized in that** the brazing layer alloy comprises at most 0.03%, preferably at most 0.02% Bi.

3. Brazing strip or sheet according to claim 1 or 2, **characterized in that** the brazing layer alloy comprises:
- Sn: from 0.015 to 0.08%, preferably from 0.02 to 0.065%.

4. Brazing strip or sheet according to any one of the preceding claims, **characterized in that** the brazing layer alloy comprises:
- Y: from 0.015 to 0.08%, preferably from 0.02 to 0.065%.

5. Brazing strip or sheet according to any one of the preceding claims, **characterized in that** the brazing layer alloy comprises, in mass percentages:
- Si: from 8 to 12%, preferably from 9 to 11%;
- Fe: at most 0.7%, preferably at most 0.6%;
- Cu: at most 0.35%, preferably at most 0.25%;
- Mn: at most 0.15%, preferably at most 0.10%;
- Mg: at most 0.10%, preferably at most 0.05%; more preferably at most 0.025%;
- Zn: at most 0.15%, preferably at most 0.10%;
- Ti: at most 0.15%, preferably at most 0.10%;
- Bi: at most 0.03%, preferably at most 0.02%;
- Y: from 0.015 to 0.08%, preferably from 0.02 to 0.065%;
- Sn: from 0.015 to 0.08%, preferably from 0.02 to 0.065%;
remainder aluminum and impurities.

6. Brazing strip or sheet according to any one of the preceding claims, **characterized in that** the core layer alloy comprises, in mass percentages:
- Si: at most 0.8%, preferably at most 0.6%, more preferably at most 0.5%, and even more preferably at most 0.25%;
- Fe: at most 0.5%, preferably at most 0.4%, more preferably at most 0.3%;
- Cu: at most 1.2%, preferably from 0.20 to 1.2%, more preferably from 0.25 to 1.1%, more preferably from 0.3 to 1.0%, more preferably from 0.5 to 1.0%, and even more preferably from 0.5 to 0.8%;
- Mn: from 0.8 to 2.2%, preferably from 0.9 to 2.1%, more preferably from 1.0 to 2.0%, more preferably from 1.2 to 1.8%, even more preferably from 1.2 to 1.65%;
- Mg: at most 0.6%, preferably at most 0.35%, more preferably at most 0.25%;
- Zn: at most 0.30%, preferably at most 0.25%, more preferably at most 0.20%, and even more preferably less than 0.05%;
- Ti: at most 0.30%, preferably at most 0.25%, more preferably at most 0.20%, even more preferably at most 0.14%, and even more preferably at most 0.12%;
- remainder aluminum and impurities.

7. Brazing strip or sheet according to any one of the preceding claims, **characterized in that** it comprises an intermediate layer, preferably 3xxx, 1xxx or 7xxx type, more preferably AA3003, AA3207 or AA1050 type.

8. Brazing strip or sheet according to any one of the preceding claims, **characterized in that** it does not comprise other layers than the core layer, said one or two brazing layers, said optional one or two intermediate layers and said optional protective layer.

9. Use of brazing strip or sheet according to any one of the preceding claims, in a fluxless or fluxfree brazing process for manufacturing heat exchangers.
